# FASCICULE DE BREVET EUROPEEN

(11) **EP 3 167 468 B1**
(45) Date de publication et mention de la délivrance du brevet: **27.03.2019**
(21) Numéro de dépôt: 15736814.3
(22) Date de dépôt: 08.07.2015
(51) Int. Cl.: H01H 33/22, H01H 33/56, H01H 33/92

(54) **DISJONCTEUR SELF-BLAST UTILISANT L'ETAT DIPHASIQUE D'UN GAZ POUR AMÉLIORER LES PROPRIÉTÉS DE COUPURE**
SELBSTBLASLASTSCHALTER MIT VERWENDUNG DES ZWEIPHASENZUSTANDES EINES GASES ZUR VERBESSERUNG DER ABSCHALTUNGSEIGENSCHAFTEN
SELF-BLAST CIRCUIT BREAKER EMPLOYING THE TWO-PHASE STATE OF A GAS FOR IMPROVING THE INTERRUPTION PROPERTIES

(30) Priorité: 08.07.2014 FR 1456584
(43) Date de publication de la demande: 17.05.2017
(73) Titulaire: General Electric Technology GmbH, 5400 Baden (CH)
(72) Inventeur: GIRODET, Alain, 69680 Chassieu (FR); BIQUEZ, François, 73100 Pugny-Chatenod (FR); KIEFFEL, Yannick, 38440 Saint-Jean-de-Bournay (FR)
(74) Mandataire: Fischer, Michael Maria
(86) Numéro de dépôt international: PCT/EP2015/065570
(87) Numéro de publication internationale: WO 2016/005435

(56) Documents cités:
- FR-A1- 2 400 251
- FR-A1- 2 582 145
- US-A- 3 257 533
- US-A- 4 268 733

## Description

### DOMAINE TECHNIQUE ET ÉTAT DE LA TECHNIQUE ANTÉRIEURE

L'invention s'applique aux chambres de coupure des disjoncteurs haute tension de 72.5 kV à 1200 kV de technologie AIS, GIS ou Dead Tank.

Les documents US 3257533, FR 2400251, FR 2582145 et US 4268733 montrent chacun les chambres de coupure des disjoncteurs utilisent gaz d'extinction de l'arc.

Les chambres de coupure des disjoncteurs utilisent depuis 40 ans le SF₆ comme gaz d'extinction de l'arc. D'un part, par rapport à des gaz comme l'air, l'azote ou le CO₂, le SF₆ a de très bonnes propriétés diélectriques et, d'autre part, ses propriétés d'électronégativité font que le milieu ionisé par l'énergie de l'arc retrouve rapidement de bonnes propriétés isolantes par attachement des électrons libres sur les ions SF₆.

La présente invention concerne un dispositif permettant d'injecter dans la zone d'arc, lors de la séparation des contacts, un liquide dont la vaporisation va aider à la coupure.

La coupure dans le liquide a été développée, dans le passé, pour toute la génération des disjoncteurs à huile. Elle a été par la suite abandonnée au profit du gaz SF₆, en raison de ses performances supérieures.

On connait la demande internationale WO 2013/087688, qui décrit l'adjonction, sur une chambre classique de disjoncteur, de volumes contenant un liquide de type organofluoré qui est partiellement éjecté dans le volume thermique, ou à proximité des contacts, par un système de pistonnage lors de la manoeuvre de l'appareil. Les liquides proposés dans ce document sont essentiellement de la famille des fluorocétones.

Le dispositif proposé dans ce document ne permet pas de contrôler de façon précise la quantité de liquide injectée. En fait il ne faut que quelques ml de liquide qui, en se vaporisant, vont créer une grande quantité de gaz. Une quantité trop variable de liquide injecté dans la zone de coupure peut produire une montée en pression trop importante et détruire les éléments de la zone de coupure, par exemple la buse.

En outre, dans ce document, le réservoir de liquide est placé autour du contact principal du disjoncteur. Or les échauffements par passage du courant permanent peuvent atteindre les 65°C, soit 105°C en température maximum. Il y a risque, dans ces conditions, d'avoir une vaporisation complète du liquide ou une surpression à évacuer dans la chambre de coupure. Tout ou partie du liquide se re-condensant au fond de l'appareil sera sans aucun effet bénéfique pour la coupure.

Cela conduit en outre à une diminution du volume de liquide dans la zone d'injection et change drastiquement la quantité de liquide injectée par compression du gaz contenu dans le volume mort.

D'autres solutions sont connues, mais elles se rapportent à des disjoncteurs purement SF6, utilisés pour les basses températures.

À ce titre, on connait notamment le document FR 2602088, qui décrit un disjoncteur SF6 pour des applications à basse température. Une injection de liquide provient de la liquéfaction du gaz de coupure lorsque la température descend en-dessous de la température de liquéfaction relative à la pression de remplissage. Le disjoncteur est du type self-blast, l'injection se faisant dans le volume thermique.

Le document US 4739137 présente un disjoncteur SF6, également pour application basse température, pour lequel l'injection de liquide est réalisée en transférant une partie du liquide condensé dans un réservoir, vers la zone de coupure, sous l'action du mouvement d'ouverture de la chambre de coupure.

Les documents EP 0204180 et FR 2585875 présentent un autre mode d'injection du liquide dans la zone de coupure. Ils sont aussi relatifs à une application sur les disjoncteurs SF₆ utilisés pour les basses températures, où une partie du gaz SF6 se condense lorsque la température passe en dessous d'une certaine valeur.

Par ailleurs, l'utilisation des mélanges de gaz utilisant le CO₂ comme gaz porteur et un fluorocétone, un fluoro-oxirane ou un fluoronitrile comme gaz de complément ont déjà montré leur intérêt du fait de leurs propriétés diélectriques proches de celles du SF₆.

Toutefois, le point de liquéfaction élevé, aux environs de 0°C, de ces composés limite la pression partielle de remplissage à une valeur voisine de la pression de vapeur saturante à la température minimum d'utilisation de l'appareil (par exemple -25°C), ce qui entraîne un faible pourcentage de gaz fluoré introduit dans le mélange (de l'ordre de 4 à 7 %). Si les propriétés diélectriques de ces mélanges sont proches de 80% de celles du SF₆, les performances en coupure s'apparentent principalement à celles du gaz porteur donc du CO₂.

Ainsi, retrouver des performances en coupure comparables à celles du SF₆ nécessite ou nécessiterait l'augmentation de la pression du gaz porteur, une augmentation des dimensions de la chambre de coupure, et/ou une réduction des performances sur le courant coupé ou la tension nominale.

Il se pose donc le problème de fournir un nouveau dispositif en vue de l'injection d'un liquide dans une zone thermique d'une chambre de coupure d'un disjoncteur.

De préférence, ce nouveau dispositif fonctionne de manière plus simple que les dispositifs connus, et ne présente pas les inconvénients ci-dessus.

Il se pose également le problème de trouver un nouveau liquide pouvant être injecté dans une zone thermique d'une chambre de coupure un disjoncteur, sans présenter les problèmes exposés ci-dessus.

Le liquide injecté a, de préférence, d'une part de bonnes propriétés diélectriques, voisines de celles du SF₆, et d'autre part, présente un impact environnemental très inférieur à celui du SF₆, notamment en termes de potentiel de réchauffement global (PRG ou GWP pour « Global Warming Potential »).

### EXPOSÉ DE L'INVENTION

L'invention vise à résoudre ces problèmes.

Elle concerne tout d'abord une chambre de coupure de courant pour disjoncteur à moyenne ou haute tension s'étendant selon un axe longitudinal (XX') et comprenant :
- une paire de contacts permanents et une paire de contacts d'arc dont l'un au moins est mobile selon l'axe longitudinal (XX') sous l'action d'un organe de manoeuvre, les contacts se séparant lors d'une coupure de courant;
- une buse de soufflage d'arc solidaire du contact d'arc fixe,
- une chambre de soufflage dont le volume V2 est figé et qui débouche à l'intérieur de la buse de soufflage,
- une chambre de compression, agencée sensiblement derrière la chambre de soufflage, parallèlement à l'axe longitudinal XX', et des moyens pour faire communiquer le volume intérieur de cette chambre de compression et celui de la chambre de soufflage,
- des moyens, disposés sensiblement derrière la chambre de compression, parallèlement à l'axe longitudinal XX', pour fournir du liquide, soit dans la chambre de compression, soit directement dans la chambre de soufflage.

Les moyens, disposés sensiblement derrière la chambre de compression, parallèlement à l'axe longitudinal XX', pour fournir du liquide, soit dans la chambre de compression, soit directement dans la chambre de soufflage, sont disposés à l'intérieur, ou du côté intérieur, d'une paroi d'un équipage mobile ou d'un ensemble de moyens mobiles, lié(s) au moins audit au moins un contact mobile. Le côté intérieur de ladite paroi peut être entendu comme celui situé du côté des contacts.

En partant de la 1^{ère} chambre, on trouve successivement, le long de l'axe XX', la chambre de compression, disposée derrière la 1^{ère} chambre, puis, derrière la chambre de compression, les moyens pour fournir du liquide.

Ces derniers peuvent comporter une 3^{ème} chambre et des moyens formant piston et pouvant se déplacer dans cette chambre sous l'action d'un recul de l'équipage mobile de ladite chambre.

Des moyens peuvent être prévus pour former un canal afin d'injecter, dans la chambre de soufflage, un liquide présent dans ladite 3^{ème} chambre. Ces moyens, formant un canal, peuvent comporter en outre des moyens formant un clapet anti-retour.

En variante, les moyens, disposés sensiblement derrière la chambre de compression, pour fournir du liquide, soit à la chambre de compression, soit directement à la chambre de soufflage, comportent des moyens formant un injecteur de liquide.

Des moyens de contrôle desdits moyens formant un injecteur de liquide peuvent en outre être prévus. Ces moyens de contrôle peuvent être reliés à au moins un capteur, par exemple comportant au moins un capteur de position relative des contacts, et/ou un capteur pour mesurer une valeur de courant et/ou un capteur pour mesurer une tension dans ladite chambre.

L'équipage mobile de la chambre peut comporter en outre des moyens pour déclencher une montée en pression dans lesdits moyens formant injecteur.

Une telle chambre de coupure peut comporter des moyens formant un accumulateur de liquide pour alimenter lesdits moyens formant injecteur.

Des moyens de stockage de liquide peuvent permettre d'alimenter lesdits moyens formant accumulateur.

Selon une réalisation particulière, l'injecteur est un injecteur - pompe.

Les moyens formant au moins un injecteur - pompe peuvent alors être alimentés par un réservoir, relié aux moyens formant injecteur sans utilisation, ni d'un accumulateur ni d'une pompe.

Des moyens de déclenchement de l'injecteur-pompe peuvent également être prévus.

L'invention peut s'appliquer à une chambre à double mouvement, avec 2 contacts mobiles.

L'invention concerne également un procédé de fonctionnement d'une chambre de coupure de courant selon l'invention, dans lequel ledit liquide est injecté, soit dans la chambre de compression, soit directement la chambre de soufflage, lors d'une séparation des contacts d'arc.

Par conséquent, selon des exemples de réalisation de l'invention, des moyens d'injection d'un liquide peuvent comporter soit un système tel qu'un réservoir combiné avec un piston, dont le déplacement est obtenu par le déplacement de la partie mobile de la chambre, soit par un dispositif de type injecteur, par exemple piloté par des moyens électroniques relevant ou mesurant des informations de tension et/ou de courant et/ou de déplacement des contacts, en vue d'une injection d'une certaine quantité de liquide à un certain instant.

Une chambre de coupure selon l'invention est utilisable à toutes les températures de fonctionnement, et pas seulement aux basses températures.

Les performances d'une chambre de coupure selon l'invention sont renforcées par injection de liquide, soit directement dans la chambre de soufflage, soit via la chambre de compression, le liquide étant sous cette forme quelle que soit la température de fonctionnement, y compris au - dessus de 72°C, ou même de 105°C.

L'invention concerne donc une chambre de coupure, ou un disjoncteur, mettant en oeuvre l'injection d'un liquide dans le volume de compression ou dans le volume thermique, pour favoriser la coupure.

Le liquide injecté peut comprendre au moins un composé fluoré.

Par « composé fluoré », on entend un composé carboné comprenant éventuellement un ou plusieurs hétéroatome(s) notamment choisi (s) parmi un atome d'oxygène ou un atome d'azote, dans lequel au moins un atome d'hydrogène est substitué par un atome de fluor. Le composé fluoré utilisable dans le cadre de la présente invention peut être un composé perfluoré. Par « composé perfluoré », on entend un composé, et notamment un composé fluoré tel que précédemment défini, dont l'ensemble des atomes d'hydrogène sont substitués par des atomes de fluor.

Avantageusement, un tel composé présente une température d'ébullition à pression atmosphérique supérieure à la température ambiante. Par « pression atmosphérique », on entend, selon l'acceptation habituelle, une pression de 1 atm correspondant à une pression de 760 mm Hg ou encore à une pression de 101,3 kPa. Par « température ambiante », on entend une température comprise entre 18 et 24°C. En particulier, le composé fluoré présente typiquement une température d'ébullition à pression atmosphérique supérieure à 40°C, notamment supérieure à 60°C et, en particulier, supérieure à 80°C.

Tout composé fluoré susceptible de présenter une telle température d'ébullition est utilisable dans le cadre de la présente invention. Un tel composé est avantageusement ni toxique, ni corrosif, ni inflammable et présente un PRG faible par rapport à celui du SF₆. Par « PRG faible », on entend un PRG inférieur à 8000, notamment inférieur à 5000 et, en particulier, inférieur à 2500. De plus, un tel composé fluoré présente typiquement une tenue diélectrique supérieure, à l'état gazeux, à celle du SF₆.

Avantageusement, ce composé fluoré est choisi dans le groupe constitué par les fluoronitriles, les oxiranes fluorés, les fluorocétones et un de leurs mélanges.

Les fluoronitriles susceptibles d'être utilisés dans le cadre de l'invention répondent à la formule générale (I) ci-après :

R¹-C(CN)(R²)-R³ (I)

dans laquelle :
- R¹ et R³, identiques ou différents, représentent un groupe alkyle fluoré ou perfluoré, et
- R² représente un atome de fluor, un groupe alkyle fluoré ou perfluoré ou un groupe aryle fluoré ou perfluoré.

Par « groupe alkyle », on entend un groupe alkyle, linéaire, ramifié ou cyclique, comprenant de 1 à 15 atomes de carbone et notamment 1 à 10 atomes de carbone et comprenant éventuellement une ou plusieurs insaturation(s) simple(s) ou double(s).

Par « groupe aryle », on entend, dans le cadre de la présente invention, une structure carbonée, aromatique, constituée d'un (ou plusieurs) cycle(s) aromatique(s) comportant chacun de 3 à 8 atomes de carbone et notamment 6 atomes de carbone, éventuellement mono- ou polysubstituée comme, par exemple, par des groupes alkyles de 1 à 6 atomes de carbone.

Un fluoronitrile avantageusement utilisé dans le cadre de la présente invention est un fluoronitrile de formule générale (I) perfluoré. En particulier, dans un tel fluoronitrile, le groupe R² représente un atome de fluor.

Plus particulièrement encore, dans un tel fluoronitrile, les groupes R¹ et R³ sont identiques. En variante d'un tel fluoronitrile, les groupes R¹ et R³ sont différents.

Les oxiranes fluorés susceptibles d'être utilisés dans le cadre de l'invention répondent à la formule générale (II) ci-après : 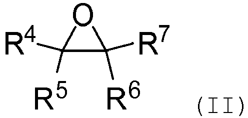 dans laquelle R⁴, R⁵, R⁶ et R⁷, identiques ou différents, représentent un atome de fluor, un groupe alkyle fluoré ou perfluoré notamment tel que précédemment défini ou un groupe aryle fluoré ou perfluoré notamment tel que précédemment défini.

Avantageusement, l'oxirane fluoré utilisé dans le cadre de l'invention est un oxirane de formule générale (II) comprenant au moins 4 atomes de carbone.

Un oxirane fluoré avantageusement utilisé dans le cadre de la présente invention est un oxirane fluoré de formule générale (II) perfluoré. En particulier, dans un tel oxirane fluoré, un, deux ou trois groupe (s) parmi R⁴, R⁵, R⁶ et R⁷ représente un atome de fluor.

A titre d'exemples illustratifs et non limitatifs de tels oxiranes fluorés, on peut citer le 2,2,3-trifluoro-3-(1,1,2,3,3-pentafluoroprop-2-enyl) oxirane de formule C₅F₈O et de numéro CAS : 15453-08-4 et le 2,2,3-trifluoro-3-(1,1,2,2,3,4,4-heptafluoro-prop-3-en-1-yl)oxirane de formule C₆F₁₀O et de numéro CAS : 15453-10-8.

Les fluorocétones susceptibles d'être utilisées dans le cadre de la présente invention répondent à la formule générale (III):

R⁸-C(O)-R⁹ (III)

dans laquelle R⁸ et R⁹, identiques ou différents, représentent un groupe alkyle fluoré ou perfluoré notamment tel que précédemment défini ou un groupe aryle fluoré ou perfluoré notamment tel que précédemment défini.

Avantageusement, la fluorocétone utilisée dans le cadre de l'invention est une fluorocétone de formule générale (III) comprenant au moins 6 et notamment au moins 7 atomes de carbone.

A titre d'exemples illustratifs et non limitatifs de telles fluorocétones fluorées, on peut citer les fluorocétones à 6 ou 7 atomes de carbone décrites dans la demande internationale WO 2013/087688.

Dans une chambre de coupure selon l'invention, la tenue diélectrique de l'appareil peut être réalisée en utilisant un gaz d'isolation ou gaz de remplissage. Ce dernier peut être du SF₆ ou, de préférence, tout autre gaz d'isolation à faible impact environnemental i.e. tout gaz d'isolation utilisé ou envisagé pour remplacer le SF₆.

A titre d'exemples illustratifs et non limitatifs, un tel gaz d'isolation peut comprendre un (ou plusieurs) élément(s) choisi(s) dans le groupe constitué par l'air et notamment l'air sec, l'azote, l'oxygène, le dioxyde de carbone, un gaz neutre et notamment de l'argon, un fluoronitrile, un oxirane fluoré, une fluorocétone ou un de leurs mélanges.

Dans un 1^{er} mode de réalisation, le gaz d'isolation peut être un gaz d'isolation choisi(s) dans le groupe constitué par l'air et notamment l'air sec, l'azote, l'oxygène, le dioxyde de carbone, un gaz neutre et notamment de l'argon, ou un de leurs mélanges.

Dans un 2^{nd} mode de réalisation, le gaz d'isolation peut être un mélange (i) d'un gaz choisi dans le groupe constitué par l'air et notamment l'air sec, l'azote, l'oxygène, le dioxyde de carbone, un gaz neutre et notamment de l'argon, ou un de leurs mélanges et (ii) d'un gaz choisi dans le groupe constitué par un fluoronitrile, un oxirane fluoré et une fluorocétone. Avantageusement, dans ce mode de réalisation, le composé fluoré liquide injecté et le 2^{nd} gaz dudit mélange appartiennent à la même famille chimique.

Ainsi, si le composé fluoré injecté est un fluoronitrile, le gaz dans le mélange sera également un fluoronitrile et notamment du 2,3,3,3-tétrafluoro-2-trifluorométhyl propanenitrile ou heptafluoroisobutyronitrile de formule CF₃-C(CN)(F)-CF₃ et de numéro CAS : 42532-60-5.

De même, si le composé fluoré injecté est un oxirane fluoré, le gaz dans le mélange sera également un oxirane fluoré et notamment le 2,3-(difluoro-2,3*-bis*(trifluorométhyl) oxirane qui répond à la formule particulière (IV) :

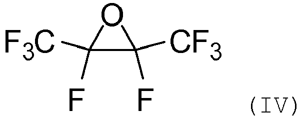

De même, si le composé fluoré injecté est une fluorocétone, le gaz dans le mélange sera également une fluorocétone et notamment une fluorocétone C4K et C5K telles que définies dans la demande internationale WO 2012/038442.

### BRÈVE DESCRIPTION DES DESSINS

D'autres avantages et caractéristiques de l'invention ressortiront mieux à la lecture de la description détaillée faite en référence aux figures suivantes :
- la figure 1 représente un premier mode de réalisation d'une chambre de coupure selon l'invention en vue de coupe longitudinale, cette chambre est munie d'un compartiment formant réservoir de liquide à injecter dans au moins une des autres chambres,
- la figure 2 représente un autre mode de réalisation d'une chambre de coupure selon l'invention en vue de coupe longitudinale, cette chambre étant munie d'un injecteur, par exemple du type utilisé dans les moteurs à explosion, en vue d'une injection dans la chambre de compression,
- la figure 3 est une variante de la figure 2, avec des moyens pour une injection, depuis ledit injecteur, directement dans le volume thermique,
- la figure 4 représente un autre mode de réalisation d'une chambre de coupure selon l'invention en vue de coupe longitudinale, cette chambre étant munie d'un injecteur-pompe, déclenché par l'équipage mobile,
- la figure 5 représente un autre mode de réalisation d'une chambre de coupure selon l'invention en vue de coupe longitudinale, avec double mouvement.

### EXPOSÉ DÉTAILLÉ DE MODES DE RÉALISATION PARTICULIERS

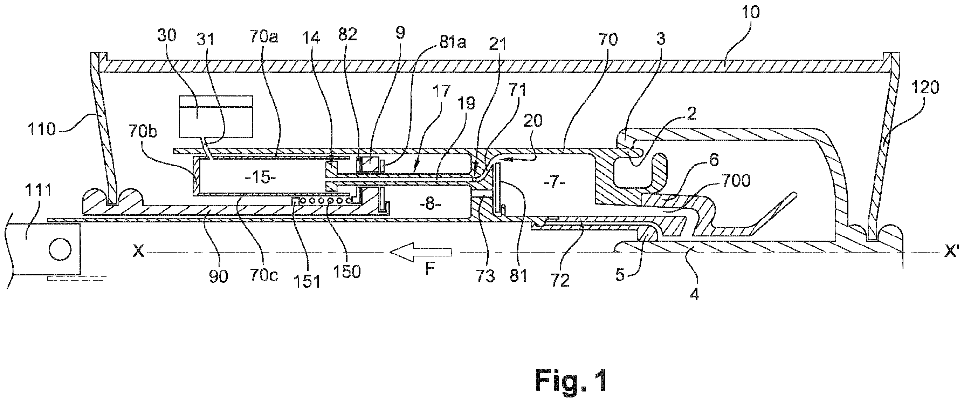

Un exemple de chambre de coupure selon l'invention est illustré en figure 1. Il s'agit d'une chambre de coupure de type « self-blast » (ou « à auto-soufflage ».

La chambre de coupure s'étend selon un axe longitudinal (XX'), qui constitue aussi un axe de révolution du dispositif, et comporte en outre une enveloppe 10, qui est ici une enveloppe métallique. Cette enveloppe abrite une paire de contacts permanents 2, 3 dont l'un est fixe 3 et l'autre 2 est mobile, selon l'axe longitudinal (XX'), sous l'action d'un organe de manoeuvre non représenté.

La chambre de coupure comporte également en un contact d'arc fixe 4, mécaniquement liée au contact permanent 3, et un contact d'arc mobile 5, ce dernier étant lié à un ensemble, ou équipage, mobile 70, 71, ou à des moyens mobiles 70, 71. Selon une réalisation, la paroi latérale de l'équipage mobile comporte un cylindre 70 coulissant parallèlement à l'axe XX'.

Un déplacement de l'équipage mobile peut être induit par des moyens 111, par exemple une tige, qui vont permettre d'exercer une traction ou une poussée sur cet équipage, le long de l'axe XX'.

Des éléments 110, 120 formant support permettent de lier mécaniquement la partie fixe et l'enveloppe extérieure 10. La partie fixe du dispositif comporte les contacts 3, 4, les supports 110, 120, et l'enveloppe 10. Dans le cas d'une enveloppe 10 métallique, les supports 110,120 sont électriquement isolants.

En variante, l'enveloppe 10 est isolante. La partie fixe du dispositif lui est reliée via des moyens formant bride, disposés à l'extrémité est l'enveloppe 10 et solidaires de cette dernière. Ce mode de réalisation n'est pas représenté de manière plus détaillée sur les figures, mais l'invention peut lui être appliquée, toutes les autres explications données ici restant valables.

L'enveloppe 10 contient un gaz, par exemple du SF6, mais de préférence un autre gaz, ou, en variante, un gaz comportant majoritairement du CO₂ ou de l'azote. En variante encore, ce gaz de remplissage peut être additionné d'une faible proportion (i.e. entre 3 et 10% en volume par rapport au volume total du mélange de gaz) de 2,3,3,3-tétrafluoro-2-trifluorométhyl propanenitrile ou heptafluoroisobutyronitrile de formule CF₃-C(CN)(F)-CF₃ et de numéro CAS : 42532-60-5.

Le contact fixe 4 est solidaire du contact fixe permanent 3. Le contact mobile 5 est, lui aussi, mobile selon l'axe longitudinal (XX') et est solidaire du contact mobile permanent 2.

Selon une variante, tous les contacts sont mobiles, le dispositif étant alors à chambre à double mouvement.

Les contacts d'arc 4, 5 sont prévus pour se séparer mutuellement lors d'une coupure de courant de même que le contact permanent 3 et 2. La séparation des contacts 2,3 se fait avant celle des contacts 4,5. De préférence, la course en translation du contact mobile 5 est suffisamment élevée pour réaliser la coupure de courant quelle que soit valeur et pour obtenir la tenue diélectrique du disjoncteur.

Il est prévu en outre une buse de soufflage d'arc 6, solidaire du contact d'arc mobile 5.

Une 1^{ère} chambre, ou 1^{er} volume, dit de soufflage (ou thermique) 7 est délimitée par la paroi latérale de l'équipage mobile 70, par une paroi 71 reliée à cet équipage mobile 70 et dirigée sensiblement perpendiculairement à l'axe XX', par la buse de soufflage d'arc 6 et par une pièce diélectrique 72 qui épouse la forme du contact d'arc mobile 5. Cette chambre 7 définit un volume V2 figé, mais qui est emmené en translation (selon la flèche F) par l'ensemble de l'équipage mobile 70, lors d'une ouverture des contacts. Ce volume débouche à l'intérieur de la buse de soufflage 6 par un canal de soufflage 700 (entre les pièces en matériau diélectrique 6 et 72), de diamètre réduit pour amener le gaz de soufflage dans une zone, extérieure à la chambre 7, où se produit l'arc formé entre les contacts d'arc lors d'une coupure.

La chambre 7 comporte un clapet 81 qui vient boucher le passage de communication 73 lorsque la pression dans le volume 7 est supérieure à celle dans le volume 8.

Une 2^{ème} chambre, ou 2^{ème} volume, dit de compression 8 est délimitée par la paroi latérale de l'équipage mobile 70, par la paroi 71, et par une paroi 9 reliée à la partie fixe du dispositif. Cette paroi 9 forme en fait un piston qui va permettre de comprimer le volume V1 de cette chambre de compression. Le volume V1 est donc variable et débouche dans la chambre de soufflage 7 dès lors que l'action du piston 9 permet de dépasser une certaine pression, comme expliqué ci-dessous.

Les chambres de compression 8 et de soufflage 7 sont sensiblement agencées l'une derrière l'autre, parallèlement à l'axe longitudinal XX'. Elles peuvent être toutes deux délimitées en partie par la surface interne de la paroi latérale 70, qui est cylindrique selon un exemple de réalisation. Elles sont séparées par la paroi 71, qui est reliée à cette paroi latérale.

Le mouvement de recul (le long de l'axe XX', selon la direction symbolisée par la flèche F) de l'équipage mobile 5, 70 lors de l'ouverture des contacts va comprimer le gaz présent dans la chambre de compression 8. La pression montant, celle-ci va devenir suffisante pour ouvrir un clapet 81, lequel va permettre au gaz sous pression d'entrer dans le compartiment 7, via un conduit 73 qui traverse la paroi 71 ; le gaz dans le volume 8 est ainsi chauffé par l'arc électrique se produisant du fait de l'ouverture des contacts 4,5 et conduisant à une augmentation de la pression. Au passage par zéro du courant le gaz est expulsé via le canal 700 pour éteindre l'arc électrique. Lors d'une manoeuvre d'ouverture du disjoncteur, il y a transfert du gaz du volume de compression 8 vers le volume thermique 7.

Par ailleurs, la paroi 9 comporte, sur sa face en regard du volume 8, un clapet 81a qui vient fermer un conduit 74, lequel traverse la paroi 9, lorsque la pression dans le volume 8 augmente lors de la manoeuvre d'ouverture. Ce clapet s'ouvre pour permettre le remplissage en gaz du volume 8 lors d'une manoeuvre de fermeture. La deuxième face du piston 9 comporte un clapet 82 mobile en translation suivant XX' et s'ouvrant uniquement lorsque la pression dans le volume 8 dépasse une certaine valeur. La limitation de la pression est réalisée par un ressort 150 en appui sur l'une des faces du clapet et sur un épaulement 151 réalisé sur la partie fixe.

Une 3^{ème} chambre 15 solidaire de la partie fixe 4 est, par exemple, disposé à l'arrière du volume de compression 8. Cette troisième chambre peut être disposée dans le volume délimité par la surface interne de la paroi latérale de l'équipage mobile 70. Cette paroi latérale définit une limite au-delà de laquelle la chambre 15 ne peut pas s'étendre.

En partant du compartiment 7, on trouve successivement, le long de l'axe XX', selon un sens opposé au contact d'arc mobile, ou en s'éloignant de celui-ci, la chambre de compression 8 puis la 3^{ème} chambre 15.

Cette chambre 15 est délimitée par la paroi fixe 9, et par une ou plusieurs parois mobiles 70, 720a, 70b, 70c. La paroi fixe 9 est mécaniquement reliée, par le biais d'une embase 90, aux éléments 110, 10, 120 et 3 de la partie fixe.

Cette chambre 15 peut être remplie de liquide. Elle est par exemple alimentée, de préférence en permanence, par un réservoir extérieur 30. Celui-ci a été représenté à proximité de la paroi 70, mais peut-être disposé à tout autre endroit et être relié au compartiment 15 par un conduit adapté 31.

Afin d'éviter que le liquide ne remonte dans le réservoir 30, ce conduit 31 est de préférence muni d'un clapet anti-retour, situé de préférence dans la chambre 15, au niveau du raccordement avec le conduit 31, permettant uniquement le transfert du liquide du réservoir 30 vers le volume 15.

Un piston 14 ferme le volume 15 en étant solidaire du contact mobile 5 et de l'équipage mobile 70, par exemple par l'intermédiaire d'un tube rigide ou d'une colonnette support 17. Ce tube, ou cette colonnette comporte, ou contient, un conduit ou un tube d'injection 19 permettant de mettre en communication le volume 15 de liquide avec le volume thermique 7.

En parallèle à l'opération d'ouverture, et à la compression du gaz contenu dans le volume 8, décrites ci-dessus, le piston 14, lui aussi mobile, se déplace dans la chambre 15 pour y comprimer le liquide contenu dans cette dernière. Sous l'action de ce piston 14, le liquide est forcé de s'évacuer par le conduit d'injection 19 vers le volume thermique 7. Pour éviter toute remontée de gaz depuis le volume 7 vers le volume 15, le canal d'injection 19 est de préférence muni d'un clapet anti-retour 21 n'autorisant que le passage du liquide du volume 15 au volume thermique 7.

Par conséquent, lors de l'ouverture des contacts 4, 5 du liquide est projeté depuis la chambre 15 vers le volume 7.

En variante, il peut y avoir injection de liquide, non pas directement dans le volume 7, mais d'abord dans le volume 8. Mais cette solution est moins efficace qu'une projection directe de la chambre 15 vers le volume 7.

En présence d'un arc électrique, l'ensemble constitué du gaz, contenu dans le volume thermique 7, ainsi que du liquide qui y a été injecté du fait du mécanisme qui vient d'être décrit, monte en pression, sous l'effet de l'échauffement. La température du plasma d'arc devient suffisante pour que le liquide, contenu dans le volume 7, se vaporise. Ainsi une faible quantité de liquide se transformera en gaz, augmentant de façon significative la pression dans le volume thermique 7. On obtient donc, dans le volume thermique 7, un mélange comportant le gaz porteur et, de façon quasi-majoritaire, le liquide sous sa forme gazeuse. L'intérêt de ce mélange est qu'il possède des propriétés diélectriques, ainsi que des propriétés d'extinction de l'arc, meilleures que celle du gaz porteur. De plus, une partie de l'énergie de l'arc est utilisée pour faire changer de phase le liquide, refroidissant ainsi la colonne d'arc.

Lors du passage par zéro du courant, l'arc s'éteignant, le plasma résiduel sera plus froid que dans le cas où il n'y a pas d'injection de liquide, le débit de gaz sera plus important et sa tenue diélectrique sera améliorée pour faciliter la tenue à la tension transitoire de rétablissement et donc la coupure du courant de court-circuit.

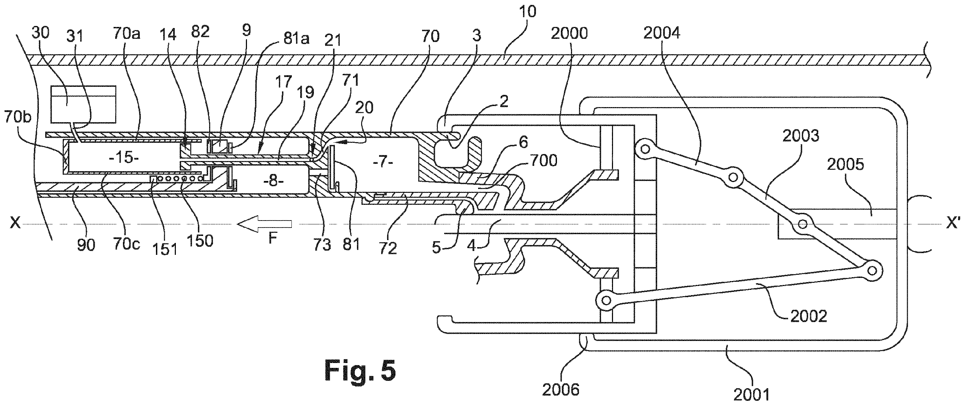

Une réalisation de l'invention, dans le cadre d'une chambre de type double mouvement, est illustrée en figure 5. Le contact 3 est alors lui aussi mobile et peut constituer un tube mobile.

Les différences par rapport à la chambre simple mouvement sont les suivantes.

Des moyens, par exemple un jeu de bielles, permettent ici, lors d'une manoeuvre d'ouverture des contacts, de réaliser, simultanément, un déplacement du contact 5 suivant la flèche F et, d'autre part, un déplacement du contact 4 dans le sens opposé à F.

La tige de contact 4 est reliée au contact mobile 3, qui coulisse à l'intérieur d'un tube 2001, fixe, un contact 2006 assurant le passage de courant entre le contact 3 et le tube 2001.

La buse 6 comporte une paroi 2000, reliée par exemple à une extrémité de la buse 6. Cette paroi 2000 coulisse à l'intérieur du contact 3. Le tube 2001 comporte un support 2005, également fixe. Un jeu de bielles 2002, 2003, 2004 relie le tube 2001 au tube 3 en passant par un point fixe du support 2005. Par exemple, ce dernier supporte une bielle 2003 libre en rotation suivant un axe de rotation perpendiculaire à XX'. La bielle 2002 est reliée d'une part à la buse 6 et d'autre part à la bielle 2003. La bielle 2004 relie le tube 3 à la bielle 2003. Lors de la manoeuvre d'ouverture le déplacement de la bielle 2002 suivant la flèche F entraine la rotation de la bielle 2003 dans le sens horaire, provoquant le déplacement dans le sens opposé à F du tube 3 grâce à la bielle 2004. Tous les autres aspects qui ont été décrits ci-dessus, en liaison avec la figure 1, et en particulier ceux concernant les fonctions et le fonctionnement des diverses chambres 7, 8, 15, sont applicables à ce mode de réalisation à double mouvement.

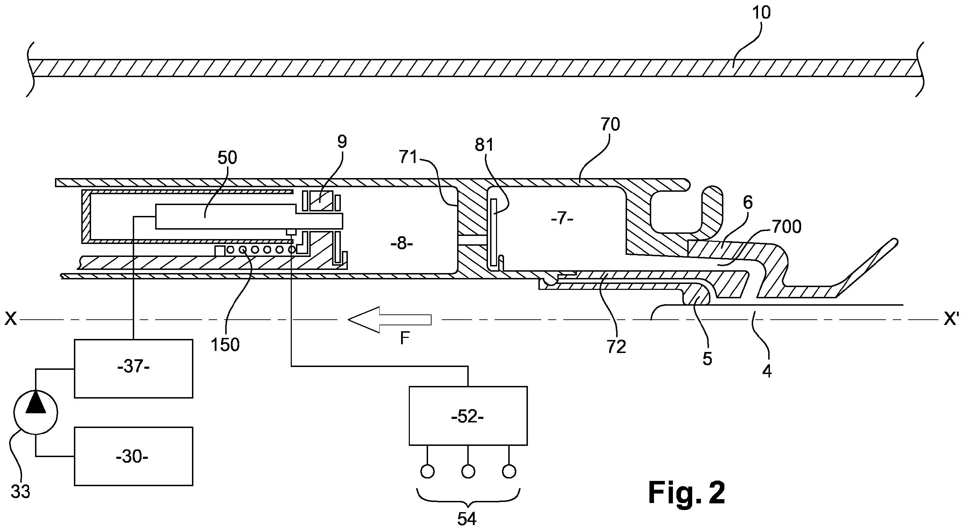

Un autre mode de réalisation est représenté en figure 2.

Sur cette figure, comme sur les figures suivantes, des références numériques identiques à celles de la figure précédente y désignent des éléments identiques ou similaires.

Dans ce mode de réalisation, un injecteur 50, par exemple de type de celui utilisé pour l'injection d'essence dans les moteurs, est fixé sur la partie fixe 9.

Il semble, par exemple, qu'un injecteur ayant les caractéristiques suivantes puisse convenir à la mise en oeuvre de ce mode de réalisation :
- temps de réaction de l'injecteur de l'ordre de 5 à 15 ms,
- durée d'injection du liquide de l'ordre de 5 à 20 ms,
- volume de liquide injecté inférieur à 10 ml.

Cette fixation de l'injecteur sur la partie 9 est donnée à titre d'exemple. On peut envisager d'autres positionnements de l'injecteur, toujours sur une partie fixe, mais avec une liaison par tube entre la sortie de l'injecteur et la partie 9.

Un réservoir 30 contient le liquide à injecter. Ce liquide est mis sous pression par l'intermédiaire d'une pompe 33 haute-pression et est stocké dans un accumulateur 37, laquelle alimente l'injecteur 50.

Sur cette figure, comme sur les figures suivantes, les éléments, 30, 33, 37, 52 sont positionnés de manière schématique pour des raisons de compréhension. Les éléments 30, 33, 35, 52 peuvent par exemple être regroupés au pied de l'appareil, dans une zone mise à la terre.

Enfin, un dispositif, tel qu'un calculateur 52, permet d'élaborer des commandes en fonction d'informations provenant par exemple de capteurs 54 positionnés dans le dispositif ; ces informations sont par exemple relatives à la position relative des contacts 4, 5, et/ou à au moins une valeur de courant, et/ou à au moins une valeur de tension dans la chambre de coupure.

Lors de l'ouverture du disjoncteur, le calculateur 52 détecte celle-ci, par exemple par l'information relative à la position relative des contacts 4, 5, et/ou la valeur d'un courant et/ou d'une tension. Le calculateur est programmé pour délivrer une instruction à l'injecteur 50 afin que celui-ci envoie une quantité limitée de liquide dans le volume de compression 8. L'injecteur est par exemple piloté au moyen d'une électro-vanne. Cette quantité de liquide sous forme de fines gouttelettes est mélangée avec le gaz contenu dans le volume 8 de compression et transféré au volume thermique 7, lorsque la pression dans le volume de compression est suffisante pour ouvrir le clapet 81.

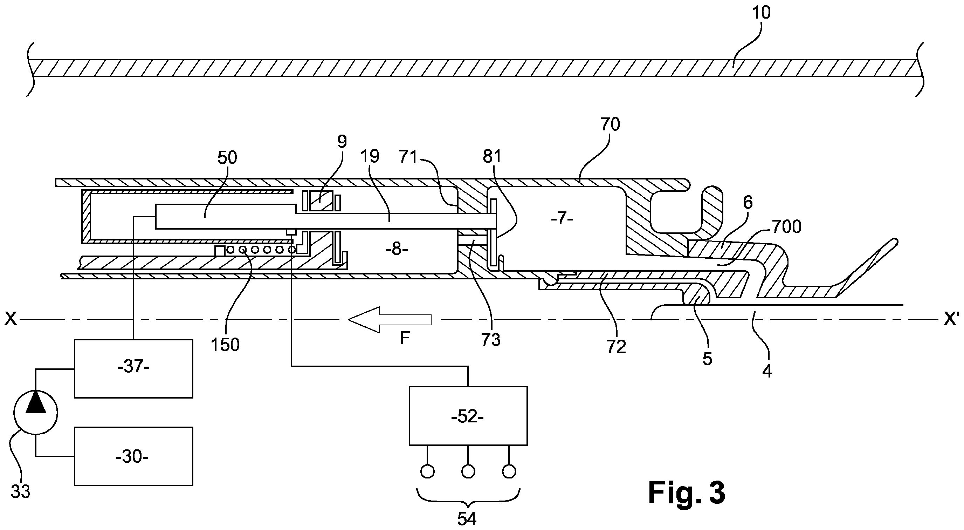

En variante (figure 3) l'injecteur est toujours monté sur la partie fixe 9 mais il est prolongé par un tube coulissant 19 qui traverse la paroi verticale 71 du tube mobile pour permettre ainsi l'injection du liquide directement dans le volume thermique 7.

Dans le cas des Figures 2 et 3, l'injecteur 50 peut comporter une electrovanne pour libérer le liquide dans la chambre 7 ou 8.

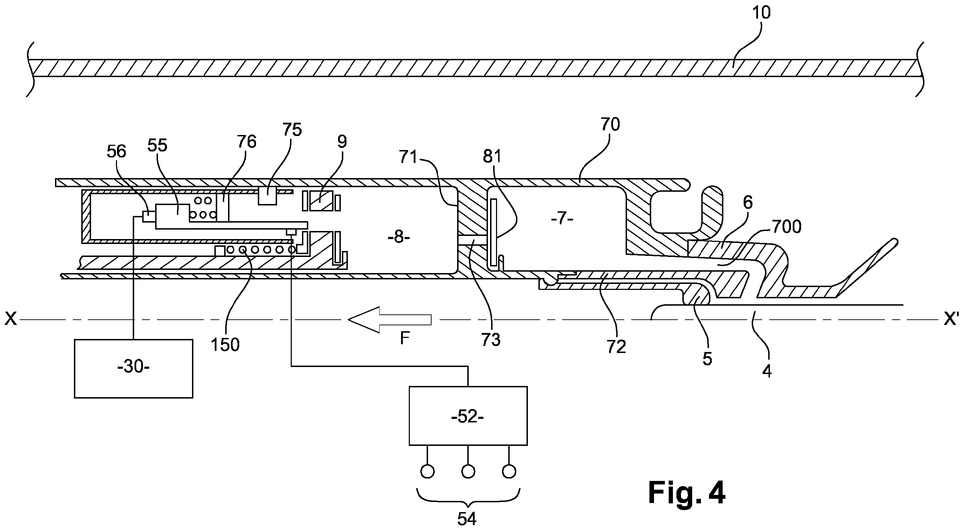

Un troisième mode de réalisation est illustré en figure 4 et met encore en oeuvre un ou des injecteurs 55, mais du type « injecteur-pompe ». Ce type d'injecteur permet de créer, de façon autonome, la haute pression d'injection. On peut ainsi éviter l'utilisation d'une pompe 33 et d'un accumulateur 37.

Dans ce mode de réalisation, l'injecteur 55 peut être également équipé d'une électrovanne 56 pour mieux ajuster la quantité de liquide injecté et l'instant d'injection du liquide.

L'instant d'injection et/ou la quantité injectée peut être déterminé(e) par la calculateur 52. Celui-ci peut prendre des informations, par exemple via des capteurs 54, disposés sur le disjoncteur et les réducteurs de mesure. Le calculateur 52 peut envoyer une commande d'injection à l'injecteur 50 ou à l'électrovanne 56.

Encore dans ce mode de réalisation, la paroi latérale de l'équipage mobile 70 (ou la paroi 70a) peut être munie d'un doigt 75. Lors de l'ouverture du disjoncteur le doigt 75 vient coopérer avec des moyens ou un mécanisme 76 formant poussoir pour générer la haute pression à l'intérieur de l'injecteur 55 ; par exemple, le doigt 75 vient appuyer sur les moyens ou le mécanisme 76. Cette action provoque la montée en pression du liquide contenu dans l'injecteur 55 et son évacuation dans le volume thermique 7 (si l'ensemble est muni d'un tube tel que le tube 19) ou dans le volume de compression 8 sinon (cas de la figure 4) ; par conséquent, les moyens 75, 76 permettent provoquer la montée en pression dans l'injecteur 55 lors du recul l'équipage mobile 70.

Selon une réalisation, dans le cas de l'utilisation d'un injecteur pompe, l'élément 76 est solidaire de l'injecteur et l'élément 75 de la partie mobile. L'élément 76 est relié à un piston qui génère la haute pression. Le calculateur 52 commande l'ouverture de la vanne qui permet au liquide sous haute pression de s'échapper dans le volume 7 ou 8.

Ces modes de réalisation décrits ci-dessus en liaison avec les figures 2-4 peuvent être appliqués aussi bien à la structure de la figure 1 qu'à celle de la figure 5.

Dans les modes de réalisation illustrés sur les figures 2-4, l'injecteur 50, 55 est positionné sur une partie fixe 9 du dispositif, dans la limite imposée par la paroi latérale de l'équipage mobile 70, ou du côté intérieur de cette paroi. Il permet d'injecter du liquide dans la chambre de compression 8 (cas des figures 2 et 4), ou bien directement dans le volume thermique 7 (cas de la figure 3). L'injecteur est avantageusement disposé dans le prolongement des chambres 7 et 8. L'injecteur peut être déclenché soit par des moyens 52 tels qu'un calculateur et/ou à l'aide de moyens fixés sur l'équipage mobile 70.

Dans les exemples décrits en lien avec les figures 2-4, en partant du compartiment 7, on trouve successivement, le long de l'axe XX', selon un sens opposé au contact d'arc mobile, ou en s'éloignant de celui-ci, la chambre de compression 8 puis les moyens 50 formant injecteur.

Le matériau utilisé sous forme liquide en vue d'une injection comprend au moins un composé fluoré avantageusement choisi dans le groupe constitué par les fluoronitriles, les oxiranes fluorés, les fluorocétones et un de leurs mélanges.

En particulier, le composé fluoré injecté est un fluoronitrile et notamment un fluoronitrile répondant à la formule générale (I) :

R¹-C(CN)(R²)-R³ (I)

telle que précédemment définie.

Un fluoronitrile avantageusement utilisé dans le cadre de la présente invention est un fluoronitrile de formule générale (I) perfluoré. En particulier, dans un tel fluoronitrile, le groupe R² représente un atome de fluor.

Plus particulièrement encore, dans un tel fluoronitrile, les groupes R¹ et R³ sont différents. Avantageusement, le groupe R¹ est un perfluorométhyle et le groupe R³ comprend au moins 2 atomes de carbone. Ainsi, les fluoronitriles utilisables dans le cadre de la présente invention sont de formules C₄F₉CN, C₅F₁₁CN, C₆F₁₅CN et C₇F₁₅CN. Tous les isomères de constitution envisageables pour le groupe R³ sont utilisables. Des exemples plus particuliers de fluoronitriles utilisables dans le cadre de la présente invention répondent à l'une quelconque des formules chimiques semi-développées suivantes :

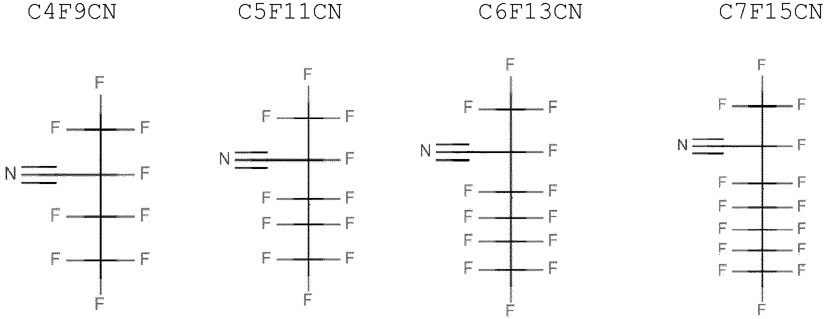

## Revendications

1. Chambre de coupure (1) de courant pour disjoncteur à moyenne ou haute tension s'étendant selon un axe longitudinal (XX') et comprenant :
- une paire de contacts d'arc (4, 5) dont l'un (5) au moins est mobile selon l'axe longitudinal (XX') sous l'action d'un organe de manoeuvre, les contacts se séparant lors d'une coupure de courant,
- une buse (6) de soufflage d'arc solidaire du contact d'arc fixe,
- une 1^{ère} chambre, dite de soufflage (7), dont le volume V2 est figé et qui débouche à l'intérieur de la buse de soufflage,
- une 2^{ème} chambre, dite de compression (8), agencée sensiblement derrière la chambre de soufflage, parallèlement à l'axe longitudinal XX', et des moyens (73, 81) pour faire communiquer le volume intérieur de cette chambre de compression (8) et celui de la chambre de soufflage (7),
- des moyens (14, 15, 50), disposés sensiblement derrière la chambre de compression (8), parallèlement à l'axe longitudinal XX', pour fournir du liquide, soit dans la chambre de compression (8), soit directement dans la chambre de soufflage (7).

2. Chambre de coupure (1) de courant selon la revendication 1, les moyens (14, 15, 50), disposés sensiblement derrière la chambre de compression (8), pour fournir du liquide, soit à la chambre de compression, soit directement à la chambre de soufflage, comportant une 3^{ème} chambre (15) et des moyens (14) formant piston et pouvant se déplacer dans cette chambre sous l'action d'un recul de l'équipage mobile (70, 71) de ladite chambre.

3. Chambre de coupure (1) de courant selon la revendication 2, comportant en outre des moyens (19) formant un canal pour injecter, dans la chambre de soufflage (7), un liquide présent dans ladite 3^{ème} chambre (15).

4. Chambre de coupure (1) de courant selon la revendication 3, lesdits moyens (19) formant un canal comportant en outre des moyens (21) formant un clapet anti-retour.

5. Chambre de coupure (1) de courant selon la revendication 1, les moyens (14, 15, 50), disposés sensiblement derrière la chambre de compression (8), pour fournir du liquide, soit à la chambre de compression, soit directement à la chambre de soufflage, comportant des moyens (50, 55) formant un injecteur de liquide.

6. Chambre de coupure (1) de courant selon la revendication précédente, comportant en outre des moyens (52) de contrôle desdits moyens (50, 52) formant un injecteur de liquide.

7. Chambre de coupure (1) de courant selon la revendication précédente, lesdits moyens (52) de contrôle étant reliés à au moins un capteur (54), pouvant comporter au moins un capteur de position relative des contacts (4, 5), et/ou un capteur pour mesurer une valeur de courant et/ou un capteur pour mesurer une tension dans ladite chambre.

8. Chambre de coupure (1) de courant selon l'une des revendications 5 à 7, l'équipage mobile (70) comportant en outre des moyens (75) pour déclencher une montée en pression dans lesdits moyens (50) formant injecteur.

9. Chambre de coupure (1) de courant selon l'une des revendications 5 à 8, comportant en outre des moyens (37) formant un accumulateur de liquide pour alimenter lesdits moyens (50) formant injecteur.

10. Chambre de coupure (1) de courant selon la revendication 9, comportant en outre des moyens (30, 33) de stockage de liquide pour alimenter lesdits moyens formant accumulateur.

11. Chambre de coupure (1) de courant selon l'une des revendications 5 à 8, les moyens (50) formant au moins un injecteur - pompe, par exemple alimentés par un réservoir (30), relié aux moyens (50) formant injecteur sans utilisation, ni d'un accumulateur (37) ni d'une pompe (33).

12. Chambre de coupure (1) de courant selon la revendication 11, comportant en outre des moyens (75) de déclenchement de l'injecteur - pompe.

13. Chambre de coupure (1) de courant selon l'une des revendications 1 à 12, chaque contact de la paire de contacts d'arc (4, 5) étant mobile selon l'axe longitudinal (XX').

14. Chambre de coupure selon l'une des revendications précédentes, dans laquelle ledit liquide comprend au moins un composé fluoré choisi dans le groupe constitué par les fluoronitriles, les oxiranes fluorés, les fluorocétones et un de leurs mélanges et/ou dans laquelle le gaz de remplissage comporte ou est de l'air, et/ou de l'azote, et/ou de l'oxygène, et/ou du dioxyde de carbone, et/ou un gaz neutre, et/ou un fluoronitrile, et/ou un oxirane fluoré, et/ou une fluorocétone, le gaz de remplissage pouvant éventuellement être additionné de 2,3,3,3-tétrafluoro-2-trifluorométhyl propanenitrile ou heptafluoroisobutyronitrile de formule CF₃-C(CN)(F)-CF₃ et de numéro CAS : 42532-60-5.

15. Procédé de fonctionnement d'une chambre de coupure (1) de courant selon l'une des revendications 1 à 14, dans laquelle ledit liquide est injecté, soit dans la chambre de compression (8), soit directement la chambre de soufflage (7), lors d'une séparation des contacts d'arc (4, 5).

## Patentansprüche

1. Stromabschaltkammer (1) für Mittel- oder Hochspannungsschalter, die sich entlang einer Längsachse (XX') erstreckt und Folgendes umfasst:
- ein Paar von Lichtbogenkontakten (4, 5), von denen mindestens einer (5) unter der Wirkung eines Betätigungselements entlang der Längsachse (XX') beweglich ist, wobei sich die Kontakte bei einem Stromausfall trennen,
- eine Lichtbogenblasdüse (6), die fest mit dem festen Lichtbogenkontakt verbunden ist,
- eine erste Kammer, genannt eine Blaskammer (7), deren Volumen V2 fest ist und die sich in das Innere der Blasdüse öffnet,
- eine zweite Kammer, genannt eine Kompressionskammer (8), die im Wesentlichen hinter der Blaskammer parallel zur Längsachse XX' angeordnet ist, und Mittel (73, 81) zum Übermitteln des Innenvolumens dieser Kompressionskammer (8) und desjenigen der Blaskammer (7),
- Mittel (14, 15, 50), die im Wesentlichen hinter der Kompressionskammer (8), parallel zur Längsachse XX', angeordnet sind, um Flüssigkeit entweder in die Kompressionskammer (8) oder direkt in die Blaskammer (7) zuzuführen.

2. Stromabschaltkammer (1) nach Anspruch 1, wobei die im Wesentlichen hinter der Kompressionskammer (8) angeordneten Mittel (14, 15, 50) zum Zuführen von Flüssigkeit entweder in die Kompressionskammer oder direkt in die Blaskammer, eine dritte Kammer (15) und Kolbenmittel (14) enthalten, die unter der Wirkung eines Rückzugs der beweglichen Ausrüstung (70, 71) der Kammer in dieser Kammer bewegbar sind.

3. Stromabschaltkammer (1) nach Anspruch 2, die weiter Mittel (19) enthält, die einen Kanal zum Einspritzen einer in der dritten Kammer (15) vorhandenen Flüssigkeit in die Blaskammer (7) bilden.

4. Stromabschaltkammer (1) nach Anspruch 3, wobei die Mittel (19), die einen Kanal bilden, weiter Mittel (21) enthalten, die ein Rückschlagventil bilden.

5. Stromabschaltkammer (1) nach Anspruch 1, wobei die im Wesentlichen hinter der Kompressionskammer (8) angeordneten Mittel (14, 15, 50) zum Zuführen der Flüssigkeit, entweder in die Kompressionskammer oder direkt in die Blaskammer, Mittel (50, 55) enthalten, die einen Flüssigkeitseinspritzer bilden.

6. Stromabschaltkammer (1) nach dem vorstehenden Anspruch, die weiter Mittel (52) zum Steuern der Mittel (50, 52), die einen Flüssigkeitseinspritzer bilden, enthält.

7. Stromabschaltkammer (1) nach dem vorstehenden Anspruch, wobei die Steuermittel (52) mit mindestens einem Sensor (54) verbunden sind, der mindestens einen Sensor für die relative Position der Kontakte (4, 5) und/oder einen Sensor zum Messen eines Stromwertes und/oder einen Sensor zum Messen einer Spannung in der Kammer enthalten kann.

8. Stromabschaltkammer (1) nach einem der Ansprüche 5 bis 7, wobei die bewegliche Ausrüstung (70) weiter Mittel (75) zum Auslösen eines Druckanstiegs in den Einspritzermitteln (50) enthält.

9. Stromabschaltkammer (1) nach einem der Ansprüche 5 bis 8, die weiter Mittel (37), die einen Flüssigkeitsakkumulator zur Versorgung der Einspritzermittel (50) bilden, enthält.

10. Stromabschaltkammer (1) nach Anspruch 9, die weiter Flüssigkeitsspeichermittel (30, 33) zur Versorgung der Akkumulatormittel enthält.

11. Stromabschaltkammer (1) nach einem der Ansprüche 5 bis 8, wobei die Mittel (50), mindestens eine Einspritzer-Pumpe-Einheit bilden, die beispielsweise von einem Behälter (30) versorgt werden, der mit den Einspritzermitteln (50) ohne Verwendung eines Akkumulators (37) oder einer Pumpe (33) verbunden ist.

12. Stromabschaltkammer (1) nach Anspruch 11, die weiter Mittel (75) zum Auslösen der Einspritzer-Pumpe-Einheit enthält.

13. Stromabschaltkammer (1) nach einem der Ansprüche 1 bis 12, wobei jeder Kontakt des Paares von Lichtbogenkontakten (4, 5) entlang der Längsachse (XX') beweglich ist.

14. Stromabschaltkammer nach einem der vorstehenden Ansprüche, wobei die Flüssigkeit mindestens eine fluorierte Verbindung umfasst, ausgewählt aus der Gruppe, bestehend aus Fluornitrilen, fluorierten Oxiranen, Fluoroketonen und einer Mischung davon und/oder wobei das Füllgas Luft enthält oder aus Luft besteht, und/oder Stickstoff und/oder Sauerstoff und/oder Kohlendioxid und/oder ein neutrales Gas und/oder ein Fluornitril und/oder ein fluoriertes Oxiran und/oder ein Fluoroketon, wobei das Füllgas gegebenenfalls mit 2,3,3,3-Tetrafluor-2-trifluormethylpropannitril oder Heptafluorisobutyronitril der Formel CF₃-C(CN)(F)-CF₃ und der CAS-Nummer: 42532-60-5 zugesetzt wird.

15. Verfahren zum Betreiben einer Stromabschaltkammer (1) nach einem der Ansprüche 1 bis 14, wobei die Flüssigkeit entweder in die Kompressionskammer (8) oder direkt in die Blaskammer (7) während einer Trennung der Lichtbogenkontakte (4, 5) eingespritzt wird.

## Claims

1. Power outage chamber (1) for medium- or high-voltage circuit breaker extending along a longitudinal axis (XX') and comprising:
- a pair of arc contacts (4, 5) one (5) of which is mobile along the longitudinal axis (XX') under the action of a moving member, the contacts being separated during a power outage,
- an arc extinguishing nozzle (6) secured to the fixed arc contact,
- a first chamber, called extinguishing chamber (7), of which the volume V2 is frozen and which leads to the inside of the extinguishing nozzle,
- a second chamber, called compression chamber (8), arranged substantially behind the extinguishing chamber, parallel to the longitudinal axis XX', and means (73, 81) to make the inner volume of this compression chamber (8) and that of the extinguishing chamber (7) communicate,
- means (14, 15, 50), arranged substantially behind the compression chamber (8) parallel to the longitudinal axis XX', to provide liquid, either in the compression chamber (8), or directly in the extinguishing chamber (7).

2. Power outage chamber (1) according to claim 1, the means (14, 15, 50), arranged substantially behind the compression chamber (8), to provide liquid, either to the compression chamber, or directly to the extinguishing chamber, comprising a third chamber (15) and means (14) forming a piston and which could be moved into this chamber under the action of a contraction of the mobile equipment (70, 71) of said chamber.

3. Power outage chamber (1) according to claim 2, further comprising means (19) forming a channel to inject, into the extinguishing chamber (7), a liquid present in said third chamber (15).

4. Power outage chamber (1) according to claim 3, said means (19) forming a channel further comprising means (21) forming a check valve.

5. Power outage chamber (1) according to claim 1, the means (14, 15, 50), arranged substantially behind the compression chamber (8), to provide liquid, either to the compression chamber, or directly to the extinguishing chamber, comprising means (50, 55) forming a liquid injector.

6. Power outage chamber (1) according to the preceding claim, further comprising means (52) for controlling said means (50, 52) forming a liquid injector.

7. Power outage chamber (1) according to the preceding claim, said control means (52) being connected to at least one sensor (54), which could comprise at least one position sensor relative to the contacts (4, 5), and/or a sensor to measure a current value and/or a sensor to measure a voltage in said chamber.

8. Power outage chamber (1) according to one of claims 5 to 7, the mobile equipment (70) further comprising means (75) to trigger an increase in pressure in said means (50) forming an injector.

9. Power outage chamber (1) according to one of claims 5 to 8, further comprising means (37) forming a liquid accumulator to supply said means (50) forming an injector.

10. Power outage chamber (1) according to claim 9, further comprising means (30, 33) for storing liquid to supply said means forming an accumulator.

11. Power outage chamber (1) according to one of claims 5 to 8, the means (50) forming at least one injector - pump, for example supplied by a reservoir (30), connected to the means (50) forming an injector without use, nor an accumulator (37), nor a pump (33).

12. Power outage chamber (1) according to claim 11, further comprising means (75) for triggering the injector/pump.

13. Power outage chamber (1) according to one of claims 1 to 12, each contact of the pair of arc contacts (4, 5) being mobile along the longitudinal axis (XX').

14. Outage chamber according to one of the preceding claims, wherein said liquid comprises at least one fluorinated compound selected from among the group constituted by fluoro-nitriles, fluorinated oxiranes, fluoroacetones and one of the mixtures thereof and/or wherein the filling gas comprises or is air, and/or nitrogen, and/or oxygen, and/or carbon dioxide, and/or neutral gas, and/or fluoro-nitrile, and/or fluorinated oxirane, and/or a fluoroacetone, the filling gas could possibly be added to 2,3,3,3-tetrafluoro-2-trifluoromethyl propane-nitrile or heptafluoroisobutyron-nitrile of formula CF₃-C(CN) (F)-CF₃ and the CAS number: 42532-60-5.

15. Method for functioning a power outage chamber (1) according to one of claims 1 to 14, wherein said liquid is injected, either into the compression chamber (8), or directly into the extinguishing chamber (7) during a separation of the arc contacts (4, 5).
